# EUROPEAN PATENT APPLICATION

(11) **EP 3 147 847 A1**
(43) Date of publication of application: **29.03.2017**
(21) Application number: 16187629.7
(22) Date of filing: 07.09.2016
(51) Int. Cl.: G06Q 20/18, G06Q 20/20, G07G 1/00, G07G 3/00

(54) **PAYMENT APPARATUS AND CONTROL PROGRAM THEREOF**

(30) Priority: 28.09.2015 JP 2015189754
(71) Applicant: Toshiba TEC Kabushiki Kaisha, Tokyo 141-0032 (JP)
(72) Inventor: GOTANDA, Tsuyoshi, Shinagawa-ku, Tokyo 141-8562 (JP); SUSAKI, Akiko, Shinagawa-ku, Tokyo 141-8562 (JP); TERASAKI, Kenji, Shinagawa-ku, Tokyo 141-8562 (JP); SUGITA, Nobuhiro, Shinagawa-ku, Tokyo 141-8562 (JP); GOTOU, Chikashi, Shinagawa-ku, Tokyo 141-8562 (JP)
(74) Representative: Takeuchi, Maya

(57) **Abstract**

A payment apparatus is configured to perform a payment processing for a payment related to a commercial transaction. A discharge unit discharges an article after the end of the payment processing. A sensor determines whether the article which is discharged has been removed. A controller determines whether the article which has not been removed is forgotten based on one or more predetermined conditions. A memory unit stores a transaction code identifying the commercial transaction and the article determined to be forgotten. An input device receives input of the transaction code. The discharge unit discharges the article determined to be forgotten that is identified in the input transaction code.

## Description

### FIELD

Embodiment described herein relates generally to a payment apparatus, a method for processing a payment and a control program thereof, as well as a system of payment.

### BACKGROUND

In a conventional self-service payment apparatus in which a customer is an operator and performs payment of the purchase price, after the end of the payment, an article such as change or a credit card is discharged in some cases. The discharged article is intended to be taken by the operator.

However, the operator may forget to take the discharged article in some cases.

In this case, the article that is forgotten to be taken is collected and held by a salesperson. Thus, after the fact, the salesperson needs to deliver the article to the operator or report the forgotten article, and this leads to increase the labor of the salesperson.

To solve such problems, there is provided a payment apparatus comprising:
a payment device configured to perform a payment processing for a payment related to a commercial transaction;
a discharge unit configured to perform a first discharge of an article after the end of the payment processing by the payment section;
a sensor configured to determine whether the article which is discharged in the first discharge has not been removed;
a controller configured to determine whether the article which has not been removed is forgotten based on one or more predetermined conditions;
a memory unit configured to store a transaction code identifying the commercial transaction and the article determined to be forgotten; and
an input device configured to receive input of the transaction code, wherein
the discharge unit performs a second discharge of the article determined to be forgotten that is identified by the input transaction code.

Preferably, the apparatus further comprises:
a collection unit configured to collect the article determined to be forgotten.

Preferably still, the discharge unit further comprises a receiving unit configured to hold the article discharged in the first discharge, wherein
the sensor determines whether the article which is discharged in the first discharge has not been removed.

Preferably yet, the discharge unit discharges money as the discharged article.

Suitably, the discharge unit discharges money equivalent to the amount identified in the input transaction code.

Suitably still, the discharge unit discharges a card as the discharged article.

Suitably yet, the apparatus further comprisesa detection unit that detects the presence of a person facing the payment apparatus,
wherein the one or more predetermined conditions are that the detection unit does not detect the presence of a person.

The invention also relates to a method of processing a payment comprising the step of:
accepting a payment for a commercial transaction;
discharging an article to a receiving unit after the payment is accepted;
determining the article which is discharged remains in the receiving unit;
determining the article which remains in the receiving unit is forgotten based on one or more predetermined conditions;
storing a transaction code identifying the commercial transaction and the article determined to be forgotten;
receiving an input of the transaction code; and
discharging the article determined to be forgotten that is identified by the input transaction code.

Preferably, the method further comprisescollecting the article determined to be forgotten.

Preferably still, a sensor determines whether the article which is discharged remains in the receiving unit.

Preferably yet, the method further comprises detecting whether a person is present facing the payment apparatus,
wherein the one or more predetermined conditions are that the presence of a person facing the payment apparatus is not detected.

Typically, money is discharged as the discharged article.

Typically still, a card is discharged as the discharged article.

The invention further relates to a non-transitory computer readable medium containing a control program causing a payment apparatus to perform the method as defined above.

The invention also concerns a payment system comprising:
a payment means configured to perform a payment processing for a payment related to a commercial transaction;
a discharge means configured to perform a first discharge of an article after the end of the payment processing by the payment means;
a sensor means configured to determine whether the article which is discharged in the first discharge has not been removed;
a controller means configured to determine whether the article which has not been removed is forgotten based on one or more predetermined conditions;
a memory means configured to store a transaction code identifying the commercial transaction and the article determined to be forgotten; and
an input means configured to receive input of the transaction code, wherein
the discharge means performs a second discharge of the article determined to be forgotten that is identified by the input transaction code.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a perspective view of the external appearance of a self-checkout apparatus according to an embodiment.
FIG. 2 is a perspective view illustrating a portion of the self-checkout apparatus.
FIG. 3 is a block diagram illustrating the main circuit configuration of the self-checkout apparatus.
FIG. 4 is a diagram schematically illustrating the contents of a table storing the forgotten change.
FIG. 5 is a flowchart of an example sequence of operation of a control program performed by a CPU 3.
FIG. 6 is a flowchart of an additional example sequence of operations of the control program performed by the CPU.

### DETAILED DESCRIPTION

According to an embodiment described herein, there is provided a payment apparatus and a control program thereof that can reduce the labor of the salesperson related to the delivery of the forgotten article.

A payment apparatus according to an embodiment is configured to perform a payment processing for a payment related to a commercial transaction. A discharge unit performs a first discharge of an article after the end of the payment processing. A sensor determines whether the article which is discharged in the first discharge remains in the discharge unit. A controller determines whether the article which is determined to remain is forgotten based on one or more predetermined conditions. A memory unit stores a transaction code identifying the commercial transaction and the article determined to be forgotten. An input device receives input of the transaction code. The discharge unit performs a second discharge of the article determined to be forgotten that is identified by the input transaction code.

Hereinafter, an example of the embodiment will be described with reference to the drawings. In the embodiment, a self-checkout apparatus that functions as a payment apparatus will be described as an example.

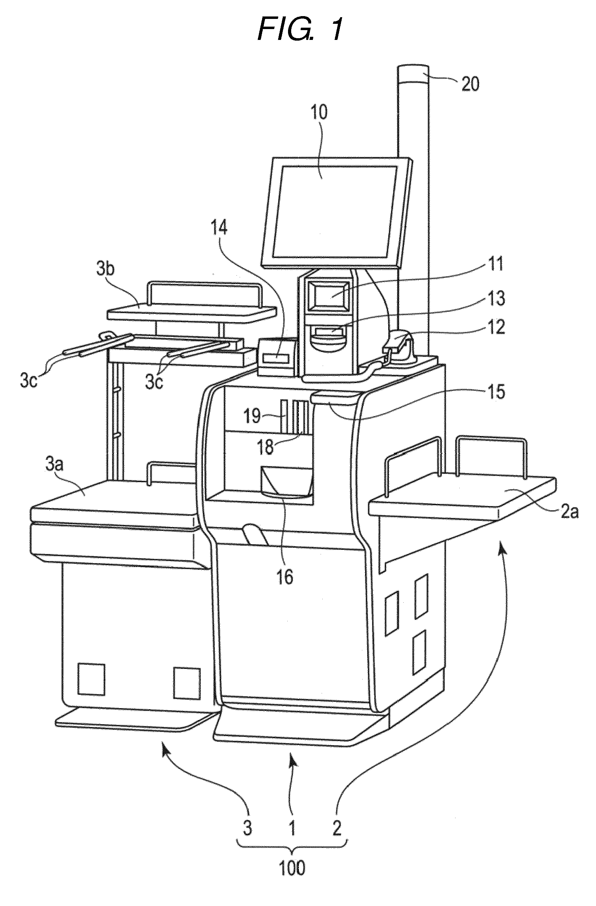

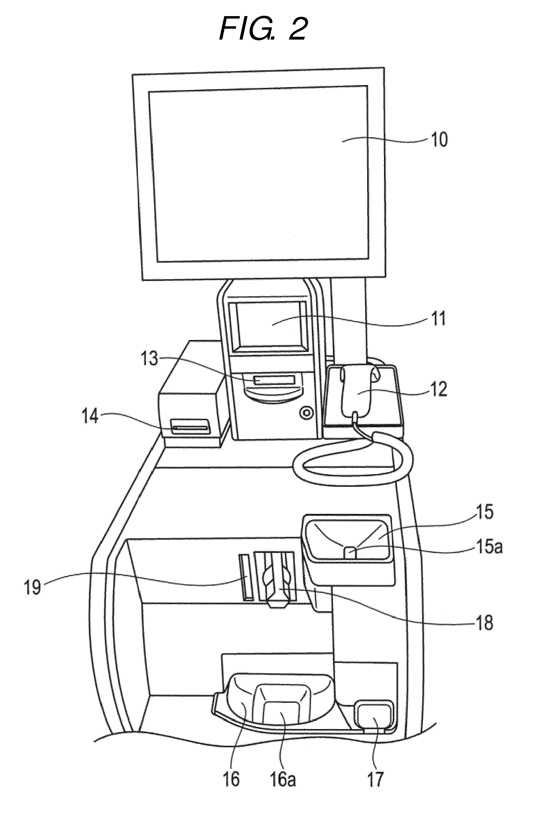

FIG. 1 is a perspective view of the appearance of the self-checkout apparatus 100 according to the embodiment. FIG. 2 is a perspective view illustrating a portion of the self-checkout apparatus 100. The self-checkout apparatus 100 according to the embodiment is also called a self-checkout POS terminal or a self-register apparatus. The self-checkout apparatus 100 is operated by a customer. Therefore, the customer is the operator of the self-checkout apparatus 100.

The self-checkout apparatus 100 includes a main body 1 and measurement devices 2 and 3.

The main body 1 includes a touch panel 10, a scanner window 11, a hand-held scanner 12, a receipt issue slot 13, a card insertion slot 14, a coin input tray 15, a change tray 16, a reject tray 17, a bill insertion slot 18, a bill discharge slot 19 and a pilot lamp 20.

The touch panel 10 displays various screens for notifying the customer of various information. The screens may be, for example: (1) a guide screen that informs the customer of an operation method, (2) an information input screen that accepts input of information for merchandise to which a bar code is not attached, (3) a read information display screen that displays the information based on a bar code read, (4) a settlement screen that displays the total amount of purchase price, the amount of deposited money, and the amount of change, or the like when performing the payment operations to pay the purchase price. Some of these screens may be provided as a graphical user interface (GUI), and the touch panel 10 receives a touch operation for the GUI operation.

The scanner window 11 covers the opening formed in the main body 1 with transparent resin or glass. The scanner window 11 allows the merchandise that is reflected in front of the scanner window 11 by the customer to be scanned by the fixed scanner that is arranged at the inside of the main body 1. The fixed scanner will be described later.

The hand-held scanner 12 reads the bar code displayed on the merchandise, and outputs the information indicated by the bar code.

The receipt issue slot 13 is a slit-shaped opening that discharges a receipt to the outside of the main body 1.

The card insertion slot 14 is a slit-shaped opening that receives a card inserted into the inside of the main body 1 and discharges the card to the outside of the main body 1.

The coin input tray 15 receives coins that are input by the customer for payment. An opening 15a is formed at the bottom surface of the coin input tray 15, and the coin received by the coin input tray 15 is taken to the inside of the main body 1 from the opening 15a.

The change tray 16 receives the coin discharged from the main body 1 as the change. The coin discharged as the change is an example of the article to be discharged after the end of the payment processing. The change tray 16 is an example of a receiving unit. A portion of the bottom surface of the change tray 16 is a movable member 16a capable of opening and closing. Coins rest on an upper surface of the movable member 16a in a closed state. The movable member 16a drops the coins in an open state.

The reject tray 17 receives a coin discharged from the main body 1 as an unusable coin.

The bill insertion slot 18 is a slit-shaped opening that takes the bill for payment that is inserted by the customer, into the inside of the main body 1.

The bill discharge slot 19 is a slit-shaped opening that discharges the bill as the change from the main body 1. The bill discharge slot 19 holds the bill in a state where a portion of the bill protrudes to the outside of the main body 1. The bill discharged as the change is another example of the article to be discharged after the end of the payment processing. The bill discharge slot 19 is another example of a receiving unit.

The pilot lamp 20 performs a flashing operation for an alarm.

The measurement device 2 includes a stand 2a on which unregistered merchandise in placed. The measurement device 2 measures the total weight of the merchandise placed on the stand 2a.

The measurement device 3 includes stands 3a and 3b on which registered merchandise is placed, and arms 3c on which a bag with the registered merchandise hangs. The measurement device 3 measures the total weight of the merchandise placed on the stands 3a and 3b and the merchandise in the bag hung on the arm 3c.

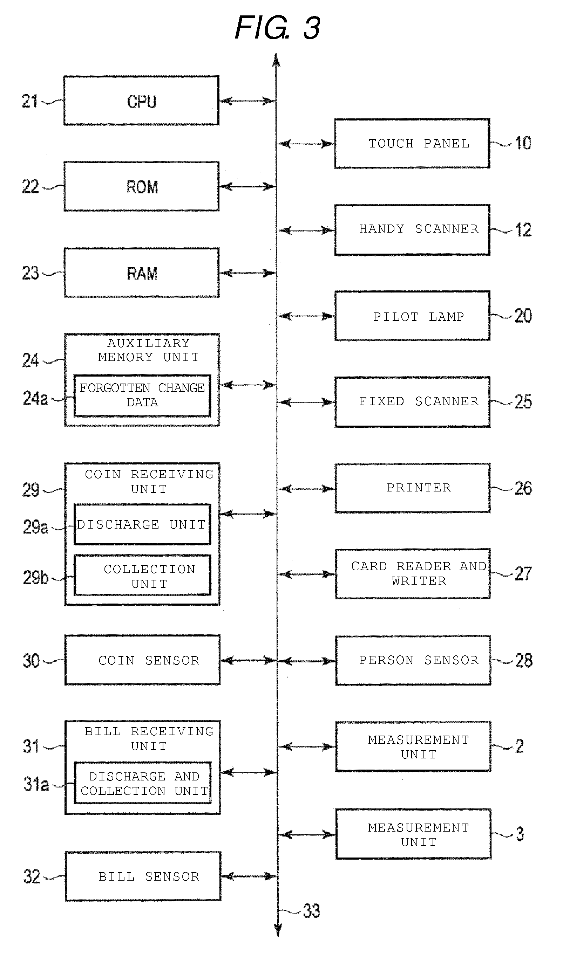

FIG. 3 is a block diagram illustrating the main circuit configuration of the self-checkout apparatus 100. In FIG. 3, the same reference numerals are given to the same components as those illustrated in FIGS. 1 and 2, and detailed description thereof will be omitted.

As illustrated in FIG. 3, the self-checkout apparatus 100 includes a central processing unit (CPU) 21, a read-only memory (ROM) 22, a random-access memory (RAM) 23, an auxiliary memory unit 24, a fixed scanner 25, a printer 26, a card reader and writer 27, a person sensor 28, a coin receiving unit 29, a coin sensor 30, a bill receiving unit 31, and a bill sensor 32, in addition to the above-described measurement devices 2 and 3, the touch panel 10, the hand-held scanner 12, and the pilot lamp 20. The main body 1 accommodates the CPU 21, the ROM 22, the RAM 23, the fixed scanner 25, the printer 26, the card reader and writer 27, the person sensor 28, the coin receiving unit 29, the coin sensor 30, the bill receiving unit 31, and the bill sensor 32. In addition, the measurement units 2 and 3, the touch panel 10, the hand-held scanner 12, the CPU 21, the ROM 22, the RAM 23, the fixed scanner 25, the printer 26, the card reader and writer 27, the coin receiving unit 29, the coin sensor 30, and the bill receiving unit 31 are connected to each other via a communication system 33 including a system bus.

The CPU 21 corresponds to the central portion of a computer. The CPU 21 controls each unit based on the operating system and the application program stored in the ROM 22 so as to achieve the various functions of the self-checkout apparatus 100. Thus, the CPU functions as a controller for the functions of the units of the self-checkout apparatus 100.

The ROM 22 corresponds to the main memory part of the computer. The ROM 22 stores the operating system and the application program. The ROM 22 also may store the data to be referenced when the CPU 21 performs various processing.

The RAM 23 corresponds to the main memory part of the computer. The RAM 23 stores the data to be referenced when the CPU 21 performs various processing. The RAM 23 is used as a so-called work area that stores the data to be temporarily used when the CPU21 performs various processing.

The auxiliary memory unit 24 corresponds to the auxiliary memory part of the computer. The auxiliary memory unit 24 stores the data to be used when the CPU 21 performs various processing or the data generated by the processing of the CPU 21. The data that is stored in the auxiliary memory unit 24 includes forgotten change data 24a. As the auxiliary memory unit 24, for example, an electric erasable programmable read-only memory (EEPROM), a hard disk drive (HDD), or a solid state drive (SSD), or the like can be used. The forgotten change data is the data for the management of change forgotten by the operator.

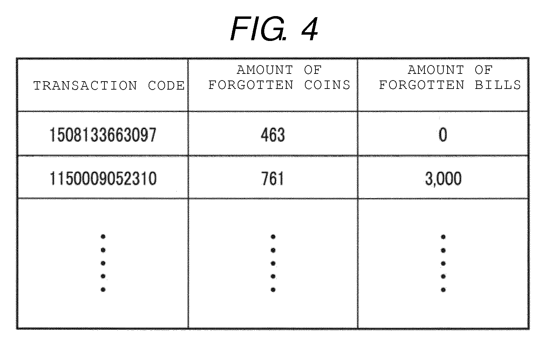

FIG. 4 is a diagram schematically illustrating the contents of the forgotten change data.

The forgotten change data may include a plurality of data records, each of which respectively represents a transaction code, the amount of forgotten coins, and the amount of forgotten bills. The transaction code is a code that can identify each of the commercial transactions for which payments are made by the self-checkout apparatus 100. The amount of forgotten coins represents the amount of coins forgotten by the operator after the payment of the commercial transaction that is identified by the transaction code illustrated in the same data record is finalized. The amount of forgotten bills represents the amount of bills forgotten by the operator after payment of the commercial transaction that is identified by the transaction code illustrated in the same data record is finalized.

The fixed scanner 25 scans the merchandise that is reflected in the front of the scanner window 11, and identifies the bar code displayed on the merchandise by image processing. The fixed scanner 25 outputs the information that is represented by the identified bar code to the CPU 21. The fixed scanner 25 can also use other types of well-known devices that identify the bar code by using the reflection of laser light.

The printer 26 includes a receipt printer and a journal printer. The receipt printer issues receipts by printing various information on receipt paper. The receipts include the contents of the commercial transaction. The receipt issued by the receipt printer is discharged from the receipt issue slot 13 to the outside of the main body 1. The journal printer prints the journal data that includes the information to be printed on the receipt paper by the receipt printer, on journal paper. The journal paper is reserved in the main body 1 unless the journal paper is removed by a maintenance person.

The card reader and writer 27 reads the data recorded on the card that is inserted to the card insertion slot 14 by the customer. The card reader and writer 27 also writes data to the card. The card may be a point card, an IC card for payment, or the like. The card reader and writer 27 discharges the card, after necessary processing is completed, from the card insertion slot 14 to the outside of the main body 1. The card insertion slot 14 holds the card to be discharged in a state where the portion of the card protrudes to the outside of the main body 1.

The person sensor 28 detects the presence of a person that is located facing the self-checkout apparatus 100. Thus, the person sensor 28 is an example of the person detection unit. As the person sensor 28, well-known sensors such as an infrared-type sensor or the like can be used.

The coin receiving unit 29 receives coins that are taken to the inside of the main body 1 from the opening 15a of the coin input tray 15. The coin receiving unit 29 is provided with a discharge unit 29a and a collection unit 29b. The discharge unit 29a discharges the coin as the change to the change tray 16. Thus, the discharge unit 29a is an example of a discharge mechanism. The collection unit 29b includes a moving mechanism for moving the movable member 16a of the change tray 16 and a coin collection box for receiving the coin dropped from the change tray 16 when the movable member 16a is in an open state.

The coin sensor 30 detects coins that are discharged to the reject tray 17. As the coin sensor 30, for example, various well-known devices such as a device that detects a change in magnetic field according to the approach of the coin, a device that detects the presence or absence of the interruption of an optical path by the coin, or the like, can be used. The coin sensor 30 is an example of an article detection unit.

The bill receiving unit 31 receives the bill that is inserted from the bill insertion slot 18. The bill receiving unit 31 includes a discharge and collection unit 31a. The discharge and collection unit 31a discharges the bill as the change from the bill discharge slot 19. Thus, the discharge and collection unit 31a is an example of a discharge mechanism. The discharge and collection unit 31a includes a bill collection box, and collects the bill into the bill collection box by drawing the bill held by the bill discharge slot 19. One collection box may be commonly used as the coin collection box and the bill collection box.

The bill sensor 32 detects bills held by the bill discharge slot 19. As the bill sensor 32, for example, various well-known devices such as a device that detects a change in magnetic field according to the approach of the bill, a device that detects the presence or absence of the interruption of an optical path by the bill, or the like, can be used. The bill sensor 32 is an example of an article detection unit.

Next, the operation of the self-checkout apparatus 100 with the configuration described above will be described.

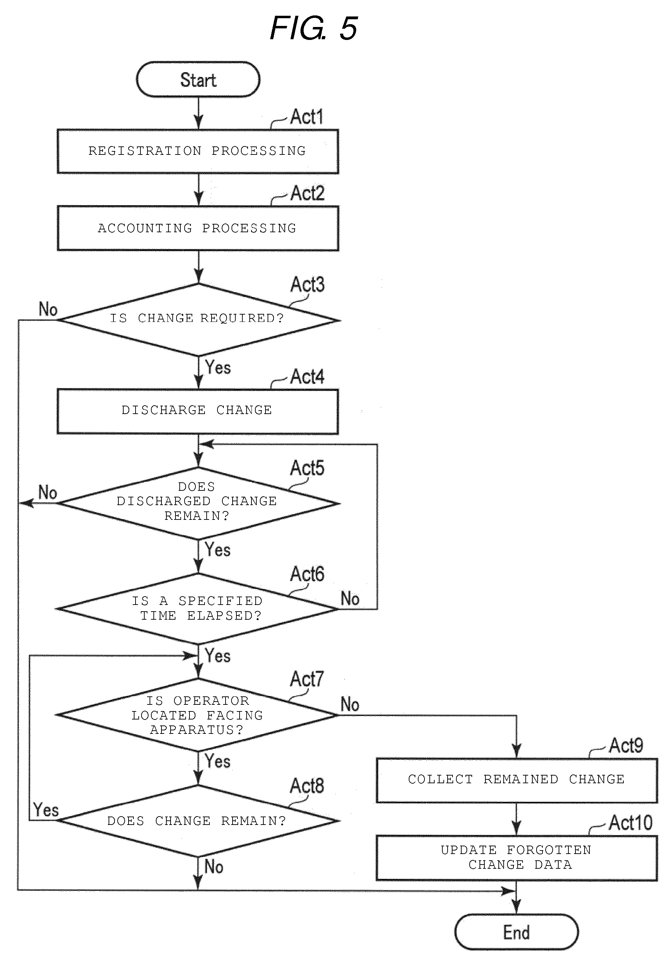

When the self-checkout apparatus 100 is in a standby state, the CPU 21 waits until various instructions are performed. When the operation for initiating accounting related to the commercial transaction is performed by, for example, the touch panel 10, the CPU 21 starts the control processing illustrated in FIG. 5 according to the control program stored in the ROM 22, in response to the operation. The contents of the processing will be described below as an example, and various processing that can achieve the same result can be appropriately used.

In Act 1, the CPU 21 performs a registration processing for registering the purchased merchandise. Specifically, the CPU 21 waits until a registration operation is performed by the operator. The registration operation includes an operation to reflect the purchased merchandise in front of the scanner window 11, an operation to move the hand-held scanner 12 to scan the bar code displayed on the purchased merchandise, an operation to touch the touch panel 10 so as to specify the purchased merchandise, or the like. When the registration processing is started, the CPU 21 generates the transaction code according to a predetermined rule. Preferably, the transaction code is a code which is difficult to be inferred from other transaction codes, rather than a serial number.

When the purchased merchandise is reflected in front of the scanner window 11, the fixed scanner 25 recognizes the bar code displayed on the purchased merchandise by image processing, and sends the information that is represented by the bar code to the CPU 21. When the hand-held scanner 12 is moved to scan the bar code, the hand-held scanner 12 identifies the bar code and sends the information that is represented by the bar code to the CPU 21. When the operation to touch the touch panel 10 is performed so as to specify the purchased merchandise, the touch panel 10 sends the position information on the touch position to the CPU 21.

The CPU 21 determines the merchandise code included in the information that is sent from the fixed scanner 25 or the hand-held scanner 12, or the merchandise code associated with the touch position that is sent from the touch panel 10, as the merchandise code of the purchased merchandise. The CPU 21 updates the information in merchandise list area that is set in the RAM 23 so as to add the merchandise that is identified by the merchandise code to the list of the purchased merchandise.

When the registration of all of the purchased merchandise is completed and the operation to instruct the execution of an accounting processing is performed by, for example, the touch panel 10, the CPU 21 ends the registration processing, and causes the process to proceed to Act 2.

In Act 2, the CPU 21 performs the accounting processing. Specifically, the CPU 21 calculates the amount of payment to be settled for buying and selling of all of the purchased merchandise that is registered. The CPU 21 performs the payment processing for the amount of payment that is calculated, according to the payment method designated by the operator among a plurality of payment methods. As the payment method, various payment methods using cash, a credit card, a debit card, a prepaid card, electronic money, points, a money coupon, or the like can be appropriately used. Furthermore, the CPU 21 generates the receipt data that represents the contents of the current commercial transaction, and provides the receipt data to the printer 26. The printer 26 prints the receipt based on the receipt data provided from the CPU 21 on receipt paper by using the receipt printer, and discharges the receipt paper from the receipt issue slot 13. The CPU 21 allows the transaction code generated in Act1 to be included in the receipt image. In this manner, the CPU 21 executes the control processing based on a control program, and thus the computer that includes the CPU 21 as a central portion functions as a payment unit.

In Act 3, the CPU 21 checks whether or not change is required as the payment processing result. When the change is required and it is determined that the check result is Yes, the CPU 21 causes the process to proceed to Act 4. In Act 4, the CPU 21 determines the amount of money to be paid for each denomination based on the amount of change calculated in the accounting processing, instructs the coin receiving unit 29 to discharge the appropriate amount of coins, and instructs the bill receiving unit 31 to discharge the appropriate amount of bills. When the instructions are respectively received, the coin receiving unit 29 and the bill receiving unit 31 respectively discharge the coins and the bills as the change, by respectively driving the discharge unit 29a and the discharge and collection unit 31a. The discharged coins and bills are held by the change tray 16 and the bill discharge slot 19. In this manner, when the coin receiving unit 29 discharges the coin, the coin sensor 30 is in a state of detecting the coin. When the bill receiving unit 31 discharges the bill, the bill sensor 32 is in a state for detecting the bill. Therefore, the CPU 21 executes the control processing based on the control program, and thus the computer that includes the CPU 21 as a central portion functions as a first discharge control unit and performs a first discharge of one or more articles. The function as a first discharge unit is achieved by the cooperation of the discharge unit 29a, the discharge and collection unit 31a, and the CPU 21.

In Act 5, the CPU 21 checks whether or not the discharged change remains on the change tray 16 or in the bill discharge slot 19. When the coin sensor 30 or the bill sensor 32 detects the coin or the bill, the CPU 21 determines that the check result is Yes, and causes the process to proceed to Act 6.

In Act 6, the CPU 21 checks whether or not a specified time has elapsed after the change is discharged. When the specified time has not elapsed and it is determined that the check result is No, the CPU 21 causes the process to return to Act 5. The specified time is assumed to be, for example, 60 seconds. However, the specified time may be arbitrary. The specified time may be defined by, for example, the designer of the self-checkout apparatus 100, the administrator of the self-checkout apparatus 100, or the like.

Thus, in Act 5 and Act 6, the CPU 21 waits for the specified time to elapse in a state where the change remains. When the specified time is elapsed and it is determined that the check result is Yes in Act 6, the CPU 21 causes the process to proceed to Act 7.

In Act 7, the CPU 21 checks whether or not the operator is located facing the self-checkout apparatus 100. When the person sensor 28 is in a detection state, the CPU 21 determines that the check result is Yes, and causes the process to proceed to Act 8.

In Act 8, the CPU 21 checks whether or not the change remains on the change tray 16 or in the bill discharge slot 19. When the coin sensor 30 or the bill sensor 32 detects the coin or the bill, the CPU 21 determines that the check result is Yes, and causes the process to return to Act 7.

Thus, in Act 7 and Act 8, the CPU 21 waits for the operator to move away from the self-checkout apparatus 100, or for all of the change to be removed.

When the person sensor 28 is in a non-detection state, in Act 7, the CPU 21 determines that the check result is No, and causes the process to proceed to Act 9. Thus, before or after the specified time is elapsed from discharging of the change, when the operator walks away from the front of the self-checkout apparatus 100 in a state where the change remains, the CPU 21 causes the process to proceed to Act 9. This corresponds to the determination that the change is forgotten. Therefore, the CPU 21 executes the control processing based on the control program, and thus the computer that includes the CPU 21 as a central portion functions as a determination unit.

In Act 9, the CPU 21 collects the remained change. Specifically, when the coin sensor 30 detects the coins, the CPU 21 collects the coins remained on the change tray 16 by driving the collection unit 29b to move the movable member 16a. When the bill sensor 32 detects the bill, the CPU 21 collects the bills that are held by the bill discharge slot 19 by driving the discharge and collection unit 31a. Therefore, the CPU 21 executes the control processing based on the control program, and thus the function as a collection unit is achieved by the cooperation of the computer that includes the CPU 21 as a central portion, and the collection unit 29b, and the discharge and collection unit 31a.

In Act 10, the CPU 21 updates the forgotten change data 24a so as to add the data record for the management related to the collection of the change. In other words, the CPU 21 generates a new data record, and updates the forgotten change data 24a so as to include the data record. Here, the CPU 21 causes the transaction code generated in Act 1 to be included in the new data record. When the coins are collected in Act 9, the CPU 21 causes the amount of coins discharged in Act 4 as the change to be included in the new data record as the amount of forgotten coins. When the bills are collected in Act 9, the CPU 21 causes the amount of bills discharged in Act 4 as the change to be included in the new data record as the amount of forgotten bills. When the coins or bills are not collected, the CPU 21 sets the amount of forgotten coins or the amount of forgotten bills in the new data record to "0". When the forgotten change data is updated, the CPU 21 ends the control processing illustrated in FIG. 5. Therefore, the CPU 21 executes the control processing based on the control program, and thus the computer that includes the CPU 21 as a central portion functions as a memory unit.

When any one of the following (1) to (3) is established, the CPU 21 passes to other processing, and ends the processing illustrated in FIG. 5. (1) When the change is not required as a result of the account processing in Act 2 and thus the CPU 21 determines that the check result is No in Act 3. (2) When, in the waiting state in Act 5 and Act 6, neither the coin sensor 30 nor the bill sensor 32 detects the coins or the bills before the specified time is elapsed, and thus the CPU 21 determines that the check result is No in Act 5. (3) When, in the waiting state in Act 7 and Act 8, neither the coin sensor 30 nor the bill sensor 32 detects the coins or the bills earlier than the person sensor 28 is in a non-detection state and thus the CPU 21 determines that the check result is No in Act 8.

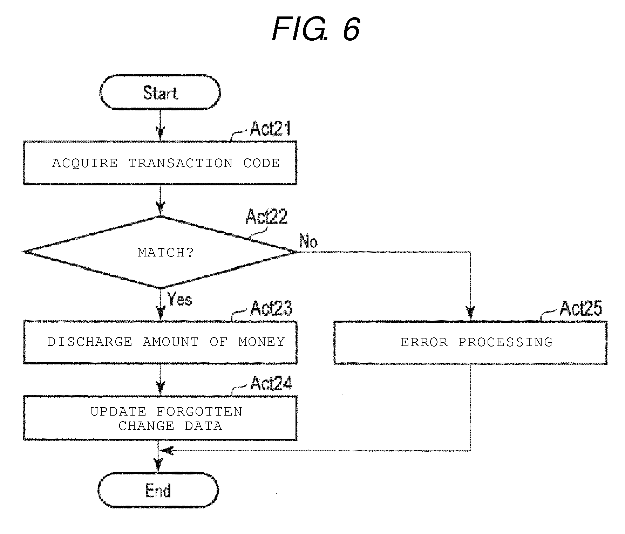

On the other hand, when the self-checkout apparatus 100 is in a standby state, the operation to request the payment of the forgotten change is performed, for example, on the touch panel 10, and thus the control processing illustrated in FIG. 6 is started according to the control program stored in ROM 22. The contents of the processing will be described below as an example, and various processing that can achieve the same result can be appropriately used.

In Act 21, the CPU 21 acquires the transaction code. For example, the customer inputs the transaction code displayed on the receipt by operating the touch panel 10. Then, the touch panel 10 notifies the transaction code that is input to the CPU 21. Thus, the CPU 21 acquires the notified transaction code. Therefore, the CPU 21 executes the control processing based on the control program, and thus the computer that includes the CPU 21 as a central portion functions as an acquisition unit.

In Act 22, the CPU 21 checks whether or not the acquired transaction code matches any one of the transaction codes included in the forgotten change data 24a. When the acquired transaction code matches any one of the transaction codes included in the forgotten change data 24a, the CPU 21 determines that the check result is Yes, and causes the process to proceed to Act 23.

In Act 23, the CPU 21 discharges the amount of money that corresponds to the amount of forgotten coins and the amount of forgotten bills included in the same data record together with the acquired transaction code. Specifically, when the amount of the forgotten coins that is included in the same data record together with the acquired transaction code is not "0", the CPU 21 instructs the coin receiving unit 29 to discharge the amount of money of the coins. When the amount of forgotten bills that is included in the same data record together with the acquired transaction code is not "0", the CPU 21 instructs the bill receiving unit 31 to discharge the amount of money of the bills. According to these instructions, the coin receiving unit 29 and the bill receiving unit 31 respectively discharge the coins and the bills by respectively driving the discharge unit 29a and the discharge and collection unit 31a. The discharged coins and bills are held by the change tray 16 and the bill discharge slot 19. Therefore, the CPU 21 executes the control processing based on the control program, and thus the computer that includes the CPU 21 as a central portion functions as a second discharge control unit that controls the discharge unit to perform a second discharge of the articles identified by the acquired transaction code. The function as a second discharge control unit is achieved by the cooperation of the discharge unit 29a, the discharge and collection unit 31a, and the CPU 21.

In Act 24, the CPU 21 updates the forgotten change data 24a. Specifically, the CPU 21 removes the data record that includes the transaction code acquired in Act 21, from the forgotten change data 24a. When the forgotten change data is updated, the CPU 21 ends the processing illustrated in FIG 6.

When the transaction code acquired in Act 21 does not match any of the transaction codes included in the forgotten change data 24a, the CPU 21 determines that the check result is No in Act 22, and causes the process to proceed to Act 25.

In Act 25, the CPU 21 executes error processing. In the error processing, the customer is notified that there is no forgotten change that is to be paid for the transaction code that is input by the customer. For example, a prepared error message may be displayed on the touch panel 10. However, whether to perform any kind of processing as an error processing may be arbitrarily defined by the designer of the self-checkout apparatus 100 or the like. When the error processing ends, the CPU 21 ends the control processing illustrated in FIG. 6.

As described above, when the operator forgets to take the change, the self-checkout apparatus 100 stores the forgotten change data 24a in which the amount of the forgotten change is associated with the transaction code, to the auxiliary memory unit 24. In a case where the transaction code that is input by the customer is acquired after the fact, when the transaction code is included in the forgotten change data, the self-checkout apparatus 100 discharges the amount of money that is associated with the transaction code. Accordingly, the amount of the forgotten change can be paid without involving a salesperson, and thus the labor of the salesperson is significantly reduced, compared to a case where the salesperson is involved in the payment of the forgotten change.

According to the self-checkout apparatus 100, the collection of the forgotten change is also automatically performed. Therefore, the salesperson does not need to be involved in the collection of the forgotten change, and thus, in this respect, the labor of the salesperson is also reduced.

According to the self-checkout apparatus 100, even in a case where the change is not removed from the change tray 16 or the bill discharge slot 19 over the specified time, when the operator is detected by the person sensor 28, the change is not collected. In the self-checkout apparatus 100, when the operator is not detected by the person sensor 28, the change is collected according to the non-detection of the operator. Therefore, when the withdrawal of the change is delayed due to the hesitation of the customer or the like but the delay does not mean that the customer forgets to take the change, it does not happen that the change is collected by mistake.

The present embodiment can be modified in various ways as follows.

In the above-described embodiment, the check of forgetting to take the money discharged in Act 23, wherein bills and coins recorded in the forgotten change data are discharged, is not performed. This is because the customer is considered to be operating the self-checkout apparatus 100 for the purpose of receiving forgotten change when the CPU 21 executes the control processing illustrated in FIG. 6, so it is considered that customers will rarely forget to take the discharged money in such circumstances. However, after the processing of Act 23, in order to be on the safe side, the CPU 21 may perform the same processing as that of Act 5 to Act 10 in FIG. 5, which is to say the CPU 21 may detect that discharged forgotten change has again been forgotten. In this case, when it is determined that the check result in Act 5 or Act 8 is No, the CPU 21 causes the process to proceed to Act 24.

In the above-described embodiment, it is assumed that all of the discharged coins and bills are forgotten, and thus the amount of forgotten money is assumed to be equal to the discharged money. In this configuration, it is unnecessary to count the amount of money to be collected, and thus it can be achieved with a simple structure. However, there is also a case where only some of the discharged coins or bills as the change may be forgotten to be taken. Therefore, by allowing the amount of collected coins or bills to be counted, the amount of the counted money may be included in the forgotten change data 24a as the amount of forgotten coins or the amount of forgotten bills. In this case, it is necessary to provide, for example, a device for counting the coins or bills to be collected, or a mechanism for feeding the coins or bills to be collected into a counting device that is originally included in the coin receiving unit 29 or the bill receiving unit 31. Therefore, although the configuration becomes more complicated, it is possible to correctly pay the amount of money that is actually forgotten to be taken after the fact.

The collected coins or bills may be accommodated in the accommodation compartment for accommodating the coins or bills taken by the coin receiving unit 29 or the bill receiving unit 31.

The collection of the forgotten coins or the forgotten bills may be performed by the salesperson. In this case, when the operation that denotes the collection of the coins or the bills is performed, for example, on touch panel 10, by the salesperson, the CPU 21 may cause the process to proceed to Act 10 according to the operation.

In the above-described embodiment, when forgotten change is discharged and collected by an operator, the forgotten change data record with the transaction code input by the operator is removed from the forgotten change database. In an alternate embodiment, a forgotten change retrieval date and time may be recorded in the forgotten change database, instead of removing the record from the database. In this way, if an accounting receipt corresponding to a transaction record with a retrieval date recorded in the forgotten change database, a message can be displayed relating the date the forgotten change was previously retrieved.

In a supermarket or the like, multiple self-checkout apparatuses 100 may be provided in some case. In this case, in Act 22 of the control processing illustrated in FIG. 6, the CPU 21 may also check the forgotten data 24a stored in the auxiliary memory unit 24 of other self-checkout apparatus 100. In this way, the customer can receive the forgotten change by using other self-checkout apparatus 100 different from that used for the payment. In this case, the forgotten change data may be stored in the memory device that is included in, for example, a POS server or the like, and the CPU 21 of each self-checkout apparatus 100 may refer to or update the forgotten change data.

The embodiment described herein can be applied to a different type of payment apparatus such as a payment apparatus in a semi-self-type checkout apparatus.

The article is not limited to money as the change, and may be various cards such as a credit card or an electronic money card.

The installation of the self-checkout apparatus 100 is generally performed in a state where the control program is stored in the ROM 22. However, the installation of the self-checkout apparatus 100 may be performed in a state where the control program is not stored in the ROM 22, and recorded in a removable recording medium. Alternatively, the control program may be transferred to the self-checkout apparatus 100 via a network. In this case, the control program is written in the RAM 23 or the auxiliary memory unit 24, for example, according to the operation by the user. As the removable recording medium, a magnetic disk, a magneto-optical disk, an optical disk, a semiconductor memory, or the like can be used.

While a certain embodiment has been described, the embodiment has been presented by way of example only, and is not intended to limit the scope of the inventions. Indeed, the novel embodiment described herein may be embodied in a variety of other forms; furthermore, various omissions, substitutions and changes in the form of the embodiment described herein may be made without departing from the framework of the inventions. The accompanying claims and their equivalents are intended to cover such forms or modifications as would fall within the scope and framework of the inventions.

## Claims

1. A payment apparatus comprising:
a payment device configured to perform a payment processing for a payment related to a commercial transaction;
a discharge unit configured to perform a first discharge of an article after the end of the payment processing by the payment section;
a sensor configured to determine whether the article which is discharged in the first discharge has not been removed;
a controller configured to determine whether the article which has not been removed is forgotten based on one or more predetermined conditions;
a memory unit configured to store a transaction code identifying the commercial transaction and the article determined to be forgotten; and
an input device configured to receive input of the transaction code, wherein
the discharge unit performs a second discharge of the article determined to be forgotten that is identified by the input transaction code.

2. The apparatus according to claim 1, further comprising:
a collection unit configured to collect the article determined to be forgotten.

3. The apparatus according to claim 1 or 2, the discharge unit further comprising:
a receiving unit configured to hold the article discharged in the first discharge, wherein
the sensor determines whether the article which is discharged in the first discharge has not been removed.

4. The apparatus according to any one of claims 1 to 3, wherein the discharge unit discharges money as the discharged article.

5. The apparatus according to claim 4, wherein the discharge unit discharges money equivalent to the amount identified in the input transaction code.

6. The apparatus according to any one of claims 1 to 5, wherein the discharge unit discharges a card as the discharged article.

7. The apparatus according to any one of claims 1 to 6, further comprising:
a detection unit that detects the presence of a person facing the payment apparatus,
wherein the one or more predetermined conditions are that the detection unit does not detect the presence of a person.

8. A method of processing a payment comprising the step of:
accepting a payment for a commercial transaction;
discharging an article to a receiving unit after the payment is accepted;
determining the article which is discharged remains in the receiving unit;
determining the article which remains in the receiving unit is forgotten based on one or more predetermined conditions;
storing a transaction code identifying the commercial transaction and the article determined to be forgotten;
receiving an input of the transaction code; and
discharging the article determined to be forgotten that is identified by the input transaction code.

9. The method according to claim 8, further comprising:
collecting the article determined to be forgotten.

10. The method according to claim 8 or 9, wherein a sensor determines whether the article which is discharged remains in the receiving unit.

11. The method according to claim 10, further comprising:
detecting whether a person is present facing the payment apparatus,
wherein the one or more predetermined conditions are that the presence of a person facing the payment apparatus is not detected.

12. The method according to any one of claims 8 to 11, wherein money is discharged as the discharged article.

13. The method according to any one of claims 8 to 12, wherein a card is discharged as the discharged article.

14. A non-transitory computer readable medium containing a control program causing a payment apparatus to perform the method according to any one of claims 8 to 13.

15. A payment system comprising:
a payment means configured to perform a payment processing for a payment related to a commercial transaction;
a discharge means configured to perform a first discharge of an article after the end of the payment processing by the payment means;
a sensor means configured to determine whether the article which is discharged in the first discharge has not been removed;
a controller means configured to determine whether the article which has not been removed is forgotten based on one or more predetermined conditions;
a memory means configured to store a transaction code identifying the commercial transaction and the article determined to be forgotten; and
an input means configured to receive input of the transaction code, wherein
the discharge means performs a second discharge of the article determined to be forgotten that is identified by the input transaction code.
